# EUROPÄISCHE PATENTANMELDUNG

(11) **EP 1 672 323 A2**
(43) Veröffentlichungstag der Anmeldung: **21.06.2006**
(21) Anmeldenummer: 05026457.1
(22) Anmeldetag: 05.12.2005
(51) Int. Cl.: G01D 5/20, G01D 5/14

(54) **Sensoreinheit mit versetzten Betätigungsflächen**

(30) Priorität: 17.12.2004 DE 202004019489 U; 18.10.2005 DE 202005016333 U
(71) Anmelder: Cherry GmbH, 91275 Auerbach/Opf. (DE)
(72) Erfinder: Habenschaden, Josef, 92702 Kohlberg (DE); Götz, Hans-Ludwig, 92256 Hahnbach (DE); Luber, Thomas, 92256 Hahnbach (DE)
(74) Vertreter: Leske, Thomas

(57) **Zusammenfassung**

Die Anmeldung betrifft eine induktive Sensoreinheit, beispielsweise für eine Positionserkennung eines Fahrzeugsitzes, mit einer Mehrzahl von Sensorspulen, die planar auf einer Leiterplatte aufgebracht sind, mit einem leitfähigen Betätigungselement, das beabstandet auf einer Bahn über die Sensorspulen geführt wird, und mit einer elektrischen Auswerteschaltung, die Induktivitätssänderungen der Sensorspulen entsprechend einer Bahnposition des Betätigungselements erfasst und in elektrische Signale -insbesondere in Sitzpositionssignale- umsetzt, wobei das Betätigungselement mit in Richtung der Bahn versetzten, leitfähigen Grundflächen über die Sensorspulen geführt wird.

## Beschreibung

Die Erfindung bezieht sich auf eine induktive Sensoreinheit, die insbesondere für die Positionserkennung eines Fahrzeugsitzes oder für eine Kulissenschaltung eines automatischen Getriebes (Wählhebelmodul) geeignet ist. Das Anwendungsgebiet der Erfindung umfasst auch eine Wegmessung an Federelementen eines Fahrwerks.

Die Erfindung ist eingebettet in die Entwicklung fehlertoleranter, sicherer Steuerungssysteme in Fahrzeugen, bei denen elektronische Kabel die herkömmlichen hydraulischen und mechanischen Verbindungen ersetzen (X-By-Wire). Die Erfindung eignet sich besonders für Aufgaben der Wegmessung, bei denen Distanzen von mehr als 30 mm zu bestimmen sind.

Das beschriebene Sensorsystem kann auch für Winkelmessungen verwendet werden, um ein Kreissegment oder eine komplette Umdrehung zu detektieren. Anwendungen hierfür sind im Automobilbereich beispielsweise die Messung der Sitzlehnenposition oder die Messung der Stellung eines Fußpedals.

Die induktive Sensoreinheit weist eine Mehrzahl von Sensorspulen auf, die planar auf einer Leiterplatte aufgebracht sind. Diese Sensorspulen arbeiten mit einem leitfähigen Betätigungselement zusammen, das beabstandet auf einer vorgegebenen Bahn über die Sensorspulen hinweggeführt wird. Das leitfähige Betätigungselement löst aufgrund von Wirbelstromeffekten Induktivitätsänderungen in den Sensorspulen aus. Die Induktivität einer Sensorspule wird durch die Wirbelströme umso stärker vermindert, je benachbarter das Betätigungselement an der Sensorspule liegt. Zu der induktiven Sensoreinheit gehört auch eine elektrische Auswerteschaltung, die diese Induktivitätsänderungen der Sensorspulen entsprechend der Bahnposition und entsprechend dem Abstand des Betätigungselements von der Sensorspule erfasst und in elektrische Signale ummünzt. Die elektrischen Signale sind insbesondere Sitzpositionssignale oder Gangschaltsignale oder Fahrwerkfedersignale.

Eine derartige Sensoreinheit, von der die Erfindung im Oberbegriff des Anspruchs 1 ausgeht, ist aus der Offenlegungsschrift WO 2004/027994 A1 bekannt.

Aus diesem Stand der Technik ist es ferner bekannt, dass die Wegmesssignale abstandsabhängig sind, d.h. wenn das Betätigungselement auf einer durch mechanische Toleranzen relativ zur Leiterplattenebene gekrümmten Bahn geführt wird oder wenn die Leiterplatte nicht eben ist, dann gehen Abstandsänderungen in die Messsignale ein. Die Leiterplatte kann in vorgegebener Weise gekrümmt sein oder es kann eine große, ebene Leiterplatte unbeabsichtigte Krümmungen aufweisen. Im Stand der Technik wird die Abstandsabhängigkeit durch eine Normierung und Kalibrierung in der elektronischen Auswerteschaltung ausgeglichen.

Ferner ist im Stand der Technik die Positionserfassung des elektrischen Betätigungselements längs der Bahn, die über die Mehrzahl der Sensorspulen führt, so realisiert, dass die Induktivitätsänderurigen jeweils benachbarter Sensorspulen miteinander verglichen werden. Diese Auswertung erlaubt lediglich eine Positionsauflösung gemäß dem Raster der benachbarten Sensorspulen.

Aus dem Stand der Technik gemäß der deutschen Patentschrift DE 103 19 720 B3 ist eine Kulissenschalteinheit zur Erzeugung von Gangschaltsignalen für ein Automatik-Schaltgetriebe eines Kraftfahrzeugs bekannt. Bei dieser Kulissenschalteinheit ist eine Schaltwelle mit einem Wählhebel in einem Schaltbock gelagert. Der Wählhebel kann in einer ersten Ebene S, aber auch senkrecht dazu in einer zweiten Ebene T verschwenkt werden. Hierzu ist er gelenkig mit der Schaltwelle verbunden. Die Bewegung des Wählhebels entspricht häufig den Stellungen P, R, N und D für die Park-, Rückwärts-, Neutral- und Fahrstellung des Wählhebels. Der Wählhebel verschwenkt einen Rotor mit einem Schaltfinger, der in einem Modulgehäuse untergebracht ist. Der Schaltfinger schwenkt über eine Leiterplatte mit einer induktiven Sensoreinheit und stellt ein Ausführungsbeispiel dar, bei dem der Schaltfinger das noch zu beschreibende Betätigungselement gemäß der vorliegenden Erfindung tragen kann. Andere räumliche Zuordnungen und andere Bahnen des leitfähigen Betätigungselements relativ zu der Leiterplatte sind ebenfalls möglich.

Aus der Offenlegungsschrift US 2003/0169033 A1 ist ferner ein Sensorfeld zur berührungsfreien Positionsmessung bekannt. Dieses Sensorfeld wird zur Bestimmung der Wegposition eines Fahrzeugssitzes genutzt. Jedes Sensorelement erzeugt ein Ausgangssignal, das mit einer Position aus der Menge der möglichen Sitzpositionen korreliert. Für die Sensoren wird der Hall-Effekt genutzt. Zur Steuerung der Hall-Sensoren ist entweder ein Magnet vorgesehen, der an den Sensoren vorbeigeführt wird, oder es ist ein magnetisches Abschirmelement vorgesehen, das durch ein die Sensoren beaufschlagendes Magnetfeld geführt wird. Auch hier erlaubt die Signalauswertung nur eine beschränkte Positionsauflösung gemäß dem Raster der benachbarten Sensoren. Von diesem Stand der Technik geht die Erfindung im Oberbegriff des nebengeordneten Anspruchs 17 aus.

Die eingangs genannten fehlertoleranten, sicheren Steuerelektroniksysteme in Fahrzeugen verlangen grundsätzlich eine erhöhte Redundanz. Einige Komponenten müssen doppelt ausgelegt werden, um Fehlfunktionen mit Sicherheit zu vermeiden. So ist es beispielsweise aus dem induktiv arbeitenden Wählhebelmodul gemäß der WO 2004/027994 A1 bekannt, pro Schaltposition zwei Sensoreinheiten vorzusehen, d.h. die Leiterplatte ist zusätzlich mit Sicherheitssensoreinheiten und einem zweiten Betätigungselement bestückt. In ähnlicher Weise ist ein mit Hall-Sensoren arbeitendes Wählhebelmodul bekannt, das mit einer größeren Zahl von Hall-Sensoren so bestückt ist, dass jede Position von der Sensorik doppelt detektiert wird. Da die Sensoren einen erheblichen Teil der Systemkosten darstellen, hat sich die Erfindung die Aufgabe gestellt, die Redundanzanforderungen, welche diese Sensoreinheit vor dem Ausfall eines Sensorelements schützen, möglichst kostengünstig zu erfüllen.

Die Lösung gelingt nach den unabhängigen Ansprüchen 1 und 17 dadurch, dass das (leitfähige oder permanentmagnetische) Betätigungselement zwei oder mehr Grundflächen trägt, die in Richtung der Bewegungsbahn versetzt über die Sensoren (d.h. über die Sensorspulen oder Hall-Sensoren) geführt werden.

Das Prinzip der Erfindung besteht darin, die notwendige Redundanz bei dem Betätigungselement vorzusehen anstatt bei den Sensoren. Das wird nachfolgend hauptsächlich am Beispiel eines Betätigungselements mit leitfähigen Bedämpfungsflächen für Sensorspulen beschrieben.

Dadurch, dass zwei oder mehr Bedämpfungsflächen in Bahnrichtung versetzt sind, kann selbst bei Ausfall einer Sensorspule die Position des mit mehr als einer Bedämpfungsfläche ausgestatteten Betätigungselements hinreichend genau ermittelt werden.

Zweckmäßige Weiterbildungen gehen aus den Unteransprüchen hervor. Bevorzugt weist das Betätigungselement zwei oder drei versetzte Grundflächen auf, die kontaktlos über die Leiterplatte geführt werden. Je nach dem zur Verfügung stehenden Bauraum können die Grundflächen entweder auf einer Seite über die Leiterplatte gleiten oder sie können die Leiterplatte gabelförmig übergreifen. Die erste Möglichkeit führt zu einer geringeren Bauhöhe, während die zweite Möglichkeit den Einfluss des Abstandes zwischen der jeweiligen Grundfläche und der Leiterplatte verringert.

Die Erfindung macht u.a. davon Gebrauch, dass durch eine Verdoppelung des (in der Regel rautenförmigen) Bedämpfungselements die Abstandsabhängigkeit der Messsignale verringert wird, wenn (i) eine einseitig planare Sensorspule gabelförmig durch das Betätigungselement überstrichen wird oder (ii) ein doppelseitig planares Spulenpaar gabelförmig überstrichen und in der Auswerteschaltung die Induktivitäten der gegenüberliegenden Sensorspulen seriell aneinander gereiht bzw. rechnerisch addiert werden. Durch diese Maßnahme wird die Normierung der Messsignale erleichtert und damit auch die Ortsauflösung zwischen benachbarten Sensorspulen präzisiert. Aufgrund dieser Maßnahme kann in der Auswerteschaltung sicherer entschieden werden, ob das leitfähige Betätigungselement eher die eine Sensorspule oder eher die andere Sensorspule überdeckt.

Zur Erfindung gehört auch, dass die Induktivitäten aller Sensorspulen - seriell im Zeitmultiplex oder auch parallel festgestellt - erfasst und mittels eines Algorithmus in eine aktuelle Bahnposition des Messelements (Betätigungselements) umgesetzt werden. Der Algorithmus kann beispielsweise den örtlichen Schwerpunkt aller Induktivitätsänderungen ermitteln oder er kann in einer anderen Variante eine quadratische Interpolation längs der Spulenreihung berechnen. Bei beiden Varianten spiegelt das Maximum der Signalverteilung die Bahnposition des Betätigungselements genauer als im Stand der Technik wieder. Beispielsweise können mit 15 Spulen 300 Positionen eines Fahrzeugsitzes aufgelöst werden. Gleichzeitig wird durch solche Auswerte-Algorithmen auch die Abstandsabhängigkeit des erzeugten Positionssignals verringert, weil die unterschiedlichen, jeweils abstandsabhängigen Messwerte längs der Bahn durch die Verrechnung in ihrer Abstandsabhängigkeit weniger ins Gewicht fallen.

Die Auswerte-Algorithmen tragen auch dazu bei, den Ausfall einer Sensorspule zu kompensieren. Wenn an einer bestimmten Bahnposition eine Sensorspule (oder ein in Serie geschaltetes Spulenpaar) ausfällt, so kann das fehlende Signal durch Interpolation ersetzt werden. Denn die benachbarten Signale sind durch die versetzten Bedämpfungsflächen verlässlicher geworden.

Ausführungsbeispiele der Erfindung werden anhand von Figuren erläutert. Es zeigt:
Figur 1 eine Seitenansicht einer Leiterplatte mit einer Mehrzahl von Sensorspulen sowie eine Aufsicht auf ein gabelförmiges Betätigungselement;
Figur 2 eine perspektivische Darstellung der Leiterplatte, der Sensorspulen und des Betätigungselements gemäß Figur 1;
Figur 3 eine grafische Darstellung eines normierten Dämpfungswertes eines von einer einzelnen Spule erzeugten Sensorsignals in Abhängigkeit von dem Überdeckungsgrad, mit dem die Sensorspule vom Betätigungselement überdeckt wird;
Figur 4 eine grafische Darstellung des normierten Dämpfungswertes des Sensorsignals von Figur 3 in Abhängigkeit vom Abstand zwischen der Sensorspule und dem Betätigungselement;
Figur 5 ein Hardware-Konzept zur Messung des induktiven Widerstands (Reaktanzmessung) von beispielsweise vier benachbarten Sensorspulen;
Figur 6 eine perspektivische Darstellung eines Schaltungsträgers (insbesondere einer Leiterplatte) und der Aufbau einer doppelseitig planar aufgebrachten und in Serie geschalteten Spule;
Figur 7 in perspektivischer Darstellung den Aufbau einer induktiven Sensoreinheit mit beispielsweise 15 doppelseitigen Spulen und einem gabelförmigen Doppelbetätiger;
Figur 8 eine grafische Darstellung der Spannungssignalwerte der 15 Spulen gemäß Figur 7 in Abhängigkeit vom Index der 15 Spulen beziehungsweise in Abhängigkeit von der Wegstrecke des Betätigungselements längs der 15 Spulen;
Figur 9 eine grafische Darstellung, in der die in Figur 8 dargestellten Spannungswerte durch eine Null-Normierung umgerechnet sind in Werte, die sich für die Anwendung einer Schwerpunktformel eignen;
Figur 10 alternativ zu der Schwerpunktsberechnung gemäß Figur 9 eine quadratische Interpolation der normierten Signale mit Hilfe einer Parabel;
Figur 11a eine induktive Sensoreinheit gemäß der Erfindung, bei der die Sensorinduktivitäten auf einer Plattenseite angebracht sind;
Figur 11b eine induktive Sensoreinheit gemäß der Erfindung, bei der zwei planare Sensorinduktivitäten auf gegenüberliegenden Seiten einer Leiterplatte untergebracht und in Serie geschaltet sind;
Figur 11c eine induktive Sensoreinheit gemäß der Erfindung, bei der gegenüberliegende Sensorspulen bezüglich ihrer Induktivität getrennt ausgewertet werden;
Figur 12 die Aufsicht einer Ausführungsform der induktiven Sensoreinheit, bei der zwei Bedämpfungsflächen des Betätigungselements in Bahnrichtung versetzt angeordnet sind;
Figur 13 eine Seitenansicht der Ausführungsform nach Figur 12;
Figur 14 ein Betätigungselement ähnlich Figur 12 mit einer dritten, versetzten Bedämpfungsfläche; und
Figur 15 eine Aufsicht einer weiteren Form der induktiven Sensoreinheit, bei der drei versetzte Bedämpfungsflächen kreisbogenförmig auf einer Seite über eine bogenförmige Sensoranordnung geführt werden.

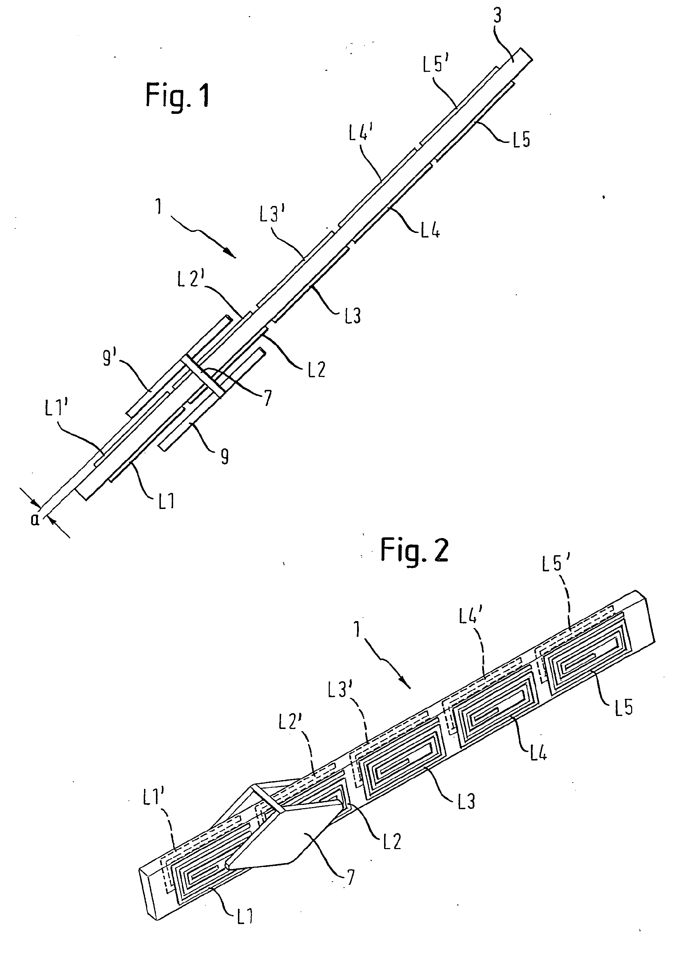

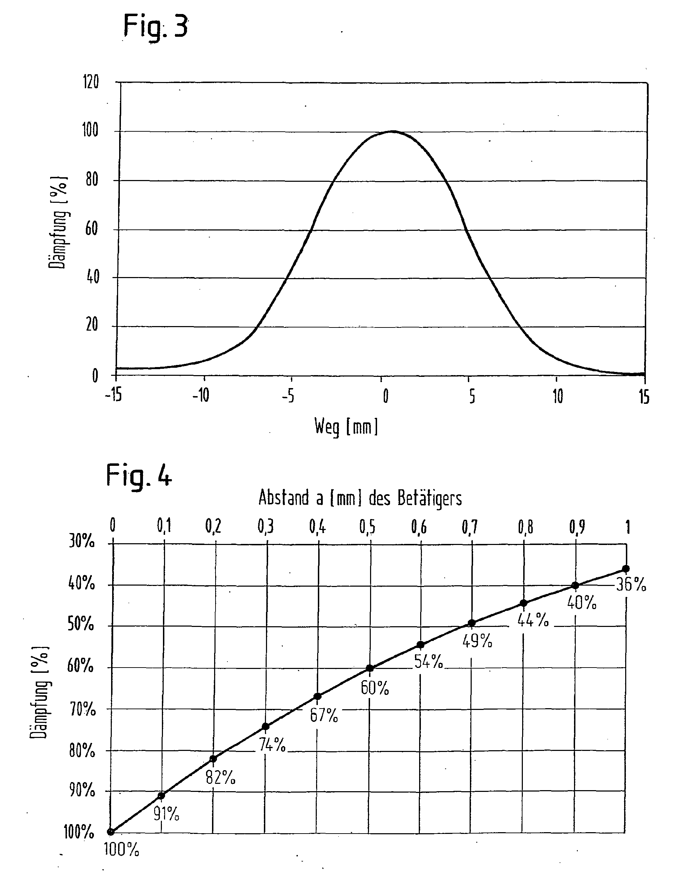

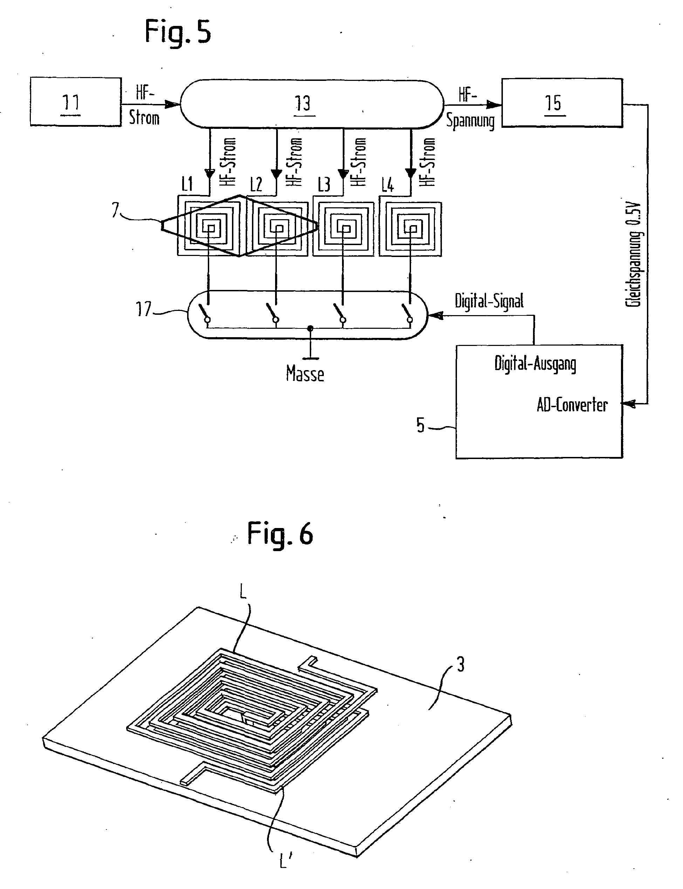

Die Erfindung geht konstruktiv von einer Sensoranordnung aus, wie sie in dem älteren Gebrauchsmuster 20 2004 019 489.9 beschrieben ist. Zum besseren Verständnis des Umfelds der vorliegenden Erfindung wird entsprechend Bezug genommen auf
- die Spulenanordnungen gemäß den Figuren 1, 2, 6, 7, 11a, 11b und 11c;
- die Dämpfungskurven gemäß den Figuren 3, 4, 8, 9 und 10; und
- die Auswerteschaltung-gemäß Figur 5.

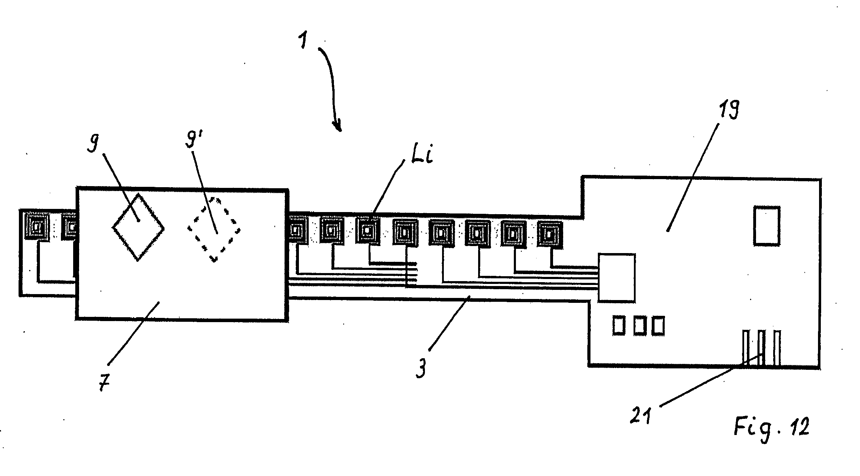

Diese Komponenten der Sensoranordnung können in den Ausführungsbeispielen der vorliegenden Erfindung gleichermaßen verwendet werden. Weiterentwickelt wird der in den Figuren 1, 2 und 7 dargestellte Doppelbetätiger, der entsprechend den Beispielen in den Figuren 12 bis 15 in Bahnrichtung verlängert ist.

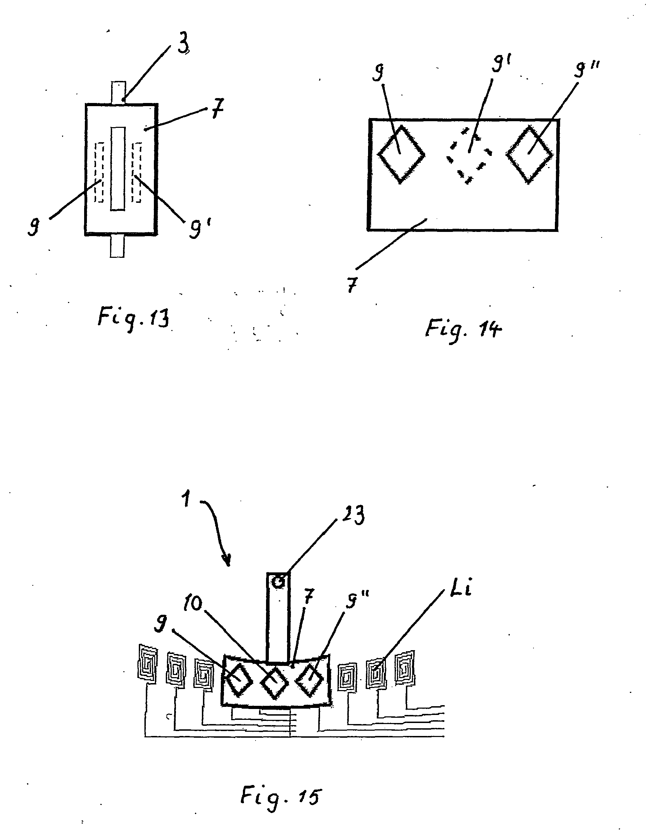

Während die Redundanz des Doppelbetätigers gemäß den Figuren 1, 2 und 7 einer Erhöhung der Messgenauigkeit in Abstandsrichtung zu Gute kommt, sorgt der Mehrfachbetätiger gemäß Figur 15 für eine größere Funktionssicherheit in Bahnrichtung. Der Übergang zwischen den Effekten ist jedoch fließend, d.h. bei den gabelförmigen und versetzten Mehrfachbetätigern gemäß Figur 12 und Figur 14 wird die Redundanz für beide Effekte genutzt.

In Figur 1 ist die Ansicht einer induktiven Sensoreinheit 1 dargestellt. Sie dient der genauen Positionsbestimmung bei induktiven Sensoren Li. Ein induktiver Sensor L ist eine Spule, die aus mehreren Windungen einer Leiterbahn auf einer Leiterplatte 3 besteht. Zur Erhöhung der Induktivität kann eine Leiterplatte 3 mit mehreren Schichten verwendet werden. Die Induktivität wird mit einer passenden elektronischen Schaltung wie beispielsweise in Figur 5 dargestellt gemessen. Ein Mikrokontroller 5 wertet die gemessenen Spannungen aus und berechnet daraus eine Weginformation. Legt man ein leitfähiges Betätigungselement 7, insbesondere eine Metallplatte, auf den Sensor L, so wird eine niedrigere Spannung ausgegeben als für den Fall, in dem sich keine Metallplatte 7 in der Nähe befindet. Die Spannungen können so normiert werden, dass die hohe Spannung einem Dämpfungswert von 0% und die niedrige Spannung einem Dämpfungswert von 100% entspricht (vgl. Figur 3).

Fährt man ein einzelnes Betätigungselement 7 über die Sensoren Li und zeichnet die Dämpfungswerte über dem Weg auf, so erhält man die in Figur 3 dargestellte Kurvenform. Es kann somit in einem gewissen Bereich jedem Dämpfungswert gemäß Figur 3 ein Wegpunkt zugeordnet werden.

Die Kurvenform gilt aber nur, wenn der Abstand a des Betätigers 7 zum Sensor Li konstant ist. Verändert man den Abstand an einer bestimmten Position, so ändert sich der Dämpfungswert gemäß Figur 4. Vergrößert man den Abstand a beispielsweise von 0 mm auf 0,1 mm, so ändert sich die normierte Dämpfung von 100% auf 91%.

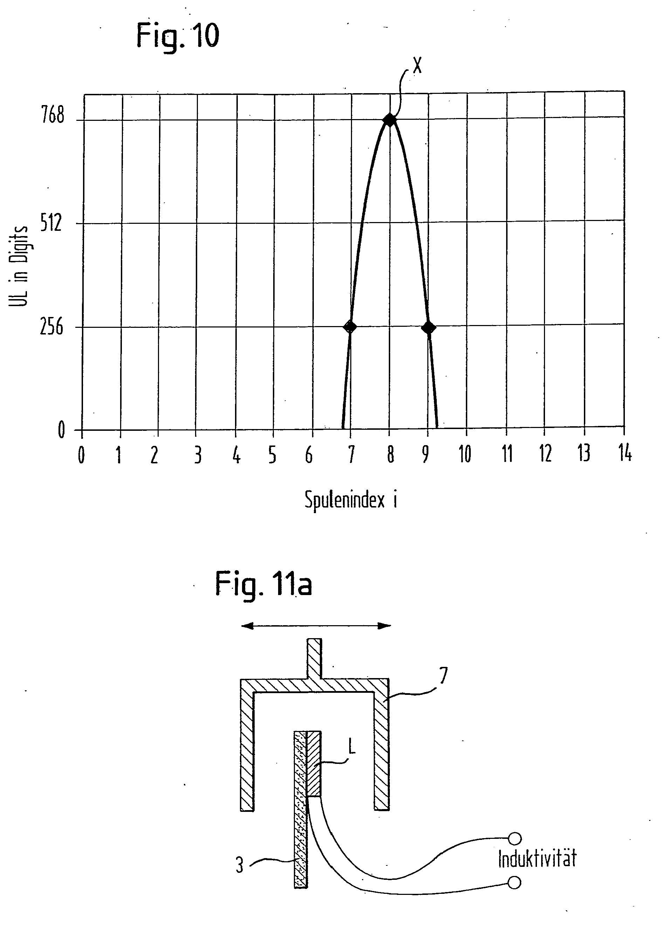

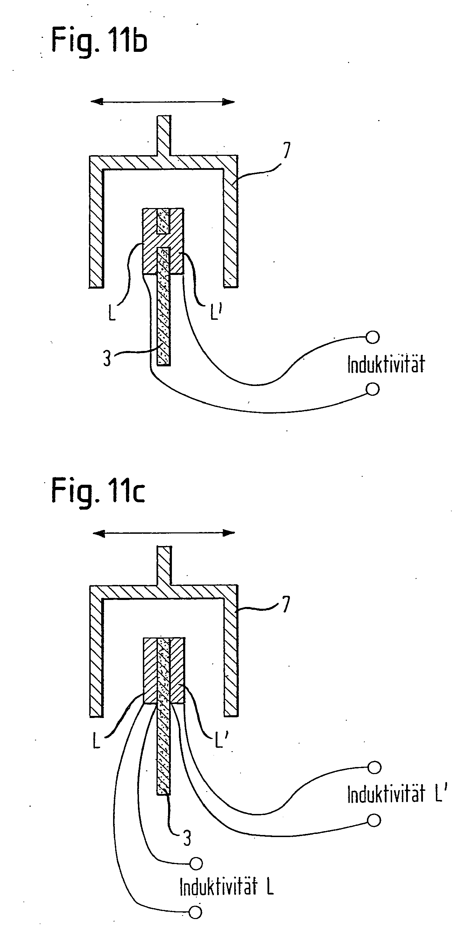

Lässt man eine Abstandsänderung zu, die in der Praxis wegen mechanischer Toleranzen immer auftritt, so ist eine eindeutige Zuordnung zwischen Sensorsignal und Weg erschwert. Um diesen Effekt zu eliminieren oder erheblich zu verkleinern, wird ein gabelförmiger Betätiger gemäß Figur 1 und Figur 2 verwendet. In Figur 1 und Figur 2 ist auch dargestellt, dass die Leiterplatte 3 beidseitig mit Sensoren Li und Li' beschichtet ist. Das Prinzip des gabelförmigen Betätigungselements 7 funktioniert jedoch auch mit einer einseitig beschichteten Leiterplatte 3 (vgl. Figur 11a im Unterschied zu den Figuren 11b und 11c).

Wenn beispielsweise in Figur 1 die Abstände a der beiden Flächen 9 und 9' des gabelförmigen Betätigers 7 von den beiden Leiterplattenseiten einen Betrag von 0,1 mm haben, so zeigen beide Sensoren Li und Li' eine Dämpfung von 91 %, bei Addition von 182%. Nähert sich nun der Betätiger 7 der einen Leiterplattenseite auf 0 mm (100% Dämpfung), so entfernt er sich auf der anderen Seite auf 0,2 mm (82% Dämpfung). Durch Addieren der Sensorsignale wird die Abstandsänderung kompensiert. In beiden Fälle ergibt sich ein Signalwert von 182%.

Das Addieren der Signale kann im Mikrokontroller 5 erfolgen (vg. Figur 11b). Die beiden Sensoren Li und Li' können aber auch in Reihe geschaltet sein, so dass nur ein Signal entsteht (vgl. Figur 11b). Durch die Reihenschaltung gemäß Figur 11b addieren sich die Induktivitäten, was den gleichen Effekt wie die Signaladdition hat.

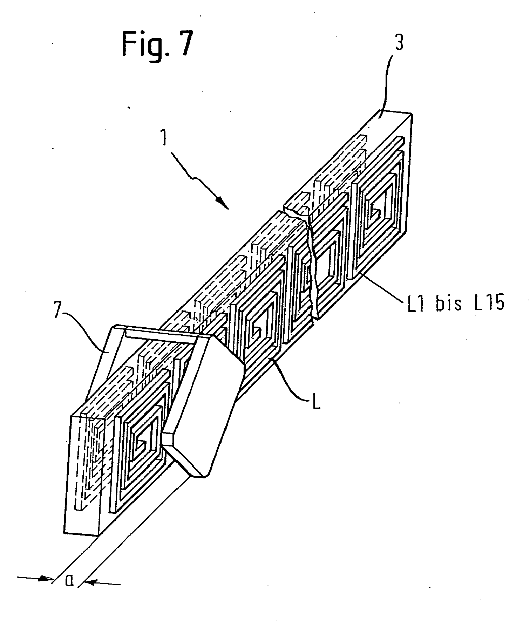

Figur 5 zeigt ein Ausführungskonzept für die erfindungsgemäße Sensoreinheit 1. Ein Sinusoszillator 11 erzeugt einen Wechselstrom mit konstanter Amplitude und konstanter Frequenz (z.B. f = 12 MHz). Dieser hochfrequente Wechselstrom wird bei 13 verstärkt und nacheinander (Multiplexer 17) in je eine der Sensorspulen L1, L2, L3, L4 eingespeist. In Figur 5 sind beispielsweise vier Sensorspulen L1 - L4 gezeigt, während in Figur 7, 8 und 9 beispielsweise 15 Sensorspulen L1 - L15 dargestellt sind.

Die Zahl der Sensorspulen ergibt sich aus dem Messbereich, der geforderten Auflösung und der geforderten Ausfallsicherheit in Verbindung mit den Trennschärfen des Betätigungselements 7 und des Auswerte-Algorithmus.

Bewegt man ein Betätigungselement 7, das aus gut leitfähigem Material wie z.B. Kupfer oder Messing besteht, über die Spulen L1 - L4, so verringert sich durch Wirbelstromverluste die Induktivität L der Spulen. Dadurch verringert sich der induktive Widerstand (die Reaktanz) der Spulen proportional. Befindet sich der Betätiger 7 mit seinem Mittelpunkt über einer Spulenmitte, so weist die Spule Li eine maximale Dämpfung auf. Der minimale induktive Widerstand hat einen minimalen Spannungsabfall (bei eingeprägtem Strom) zur Folge.

Der Spannungsabfall an der Spulen L1 - L4 wird bei 15 gleichgerichtet und einem Mikrokontroller 5 zur Weiterverarbeitung zugeführt. Es kann in bekannter Weise auch mit eingeprägter Spannung oder mit Verstimmung von Resonanzkreisen gearbeitet werden.

Ein Beispiel für den Aufbau einer Sensorspule L ist in Figur 6 dargestellt. Die gewählten Parameter sind keine festen Größen und dienen rein der Veranschaulichung. Die Spulen L und L' befinden sich auf einem Schaltungsträger (z.B. einer Leiterplatte 3 oder einem gleichwertigen Schaltungsträger) und sind doppelseitig planar angeordnet. Sie sind elektrisch miteinander verbunden (vgl. Figur 11b) und besitzen einen schneckenförmigen Wicklungssinn. Durch diese Anordnung erhöht sich die Windungszahl, was eine höhere Induktivität zur Folge hat.

Aus diesen Elementen kann eine induktive Sensoreinheit 1 gemäß Figur 7 gebaut werden. In diesem Ausführungsbeispiel befinden sich 15 Spulen L1 - L15 auf dem Schaltungsträger 3. Die geometrischen Abmessungen der Spulen hängen von der gewünschten Induktivität und vom Material ab. Bei einer 25 mm x 10 mm großen rechteckigen Spule L mit 40 Windungen erhält man eine Induktivität von ungefähr 14 µH. Die Spulen Li sind nebeneinander angeordnet und besitzen einen Abstand von 25 mm. Bedämpft werden die Spulen von einem rautenförmigen Doppelbetätiger 7 gemäß Figur 7 (vgl. auch Figur 2).

Ist ein Sensor Li nicht vom Betätiger 7 bedeckt, so beträgt die Dämpfung 0%; bei voll bedecktem Sensor Li beträgt sie 100% (vgl. Figur 3). Die Dämpfung ist auch noch vom Abstand a des Betätigers 7 von den Sensorspulen Li abhängig; bei größerem Abstand a verringert sich die maximale Dämpfung, wie in Figur 4 zu sehen ist.

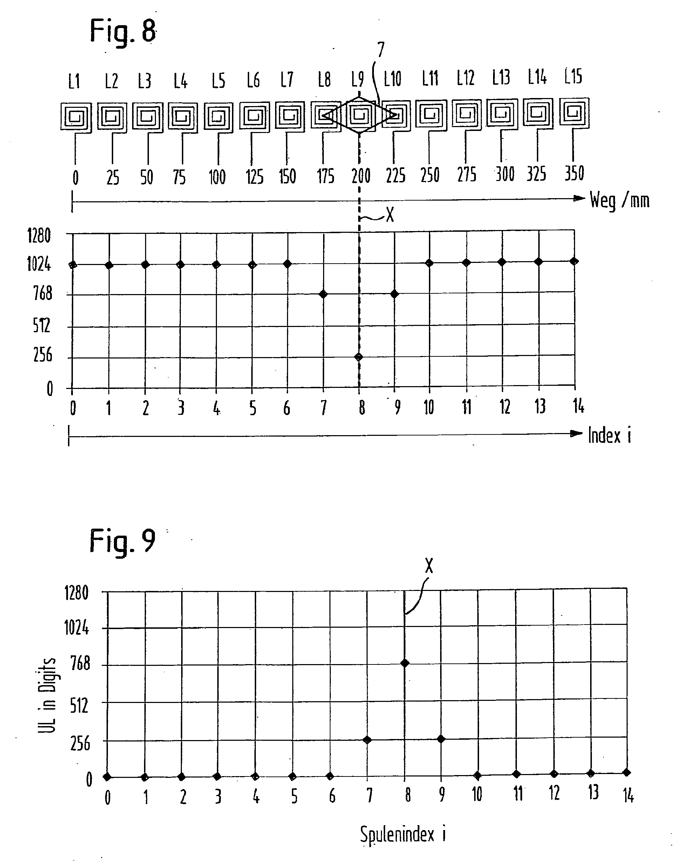

Durch den Doppelbetätiger 7 gemäß Figur 7 wird eine Abstandsabweichung kompensiert und die Dämpfung wird bei geeigneter Auswertung konstant gehalten. Die Signalauswertung ist in den Figuren 8 und 9 dargestellt. Beispielhaft befindet sich der Betätiger 7 bei einer Wegmarke von 200 mm.

Der Mikrokontroller 5 misst zyklisch in festen Zeitabständen die Spannungen der Sensoren L1 - L15, die proportional zu ihren Induktivitäten sind. Diese Spannungen werden im Mikrokontroller 5 in Binärwerte umgewandelt und in einem Speicher mit Laufindex 0 - 14 gespeichert. In Figur 8 sind die gemessenen Spannungen in Abhängigkeit vom Index 0 - 14 dargestellt.

Im nächsten Schritt wird eine Null-Normierung gemäß Figur 9 vorgenommen. Dies geschieht, indem der Mikrokontroller 5 aus den Punkten gemäß Figur 8 das Sensorsignal mit der höchsten Spannung (dem höchsten Binärwert) ermittelt. Im Beispiel ist das die Binärzahl 1024. Danach wird die höchste Spannung von jedem der 15 Sensorwerte subtrahiert. Das normierte Diagramm ist in Figur 9 zu sehen.

In der Praxis tritt bei der Signalerfassung der Spulen Li ein Rauschen auf. Die Spulen Li ohne Dämpfung besitzen keinen ganz konstanten Wert. Dieses Rauschen kann unterdrückt werden, indem man beispielsweise nur die drei kleinsten Spannungswerte berücksichtigt und mit dem Maximum dieser drei Spannungen die Null-Normierung gemäß Figur 9 durchführt.

Eine andere Möglichkeit zur Positionserfassung ist ein Interpolieren mit einer quadratischen Funktion durch drei Punkte, wie es in Figur 10 dargestellt ist.

Hierzu wird nach der Null-Normierung der maximale Wert der Parabel gesucht. Im Beispiel hat das Maximum den Zahlenwert 768 und liegt bei der Indexspule 8. Als zweiter und dritter Punkt wird der Wert links und rechts vom Maximum benötigt, um die Interpolation durchzuführen. Im Beispiel hat die Spannung links vom Maximum den Zahlenwert 256 und liegt bei der Indexspule 7, während der Zahlenwert rechts vom Maximum mit 256 bei der Indexspule 9 liegt. Die Interpolation kann nach bekannten mathematischen Algorithmen erfolgen. Die drei Punkte im Diagramm gemäß Figur 10 und die Interpolationsparabel zeigen, dass der Scheitelpunkt der Parabel die gesuchte Position des Betätigungselements 7 ist.

Anhand der Figuren 12 und 13 wird eine erfindungsgemässe Abwandlung des gabelförmigen Betätigungselements 7 erläutert, dessen zwei rautenförmige Bedämpfungsflächen 9, 9' hier in Richtung der Bewegungsbahn versetzt angeordnet sind. Wiederum gleitet das Betätigungselement 7 kontaktlos über die lineare Anordnung von Sensorspulen Li. Die Sensorspulen Li sind auf einer Leiterplatte 3 oder auf einem vergleichbaren Schaltungsträger aus Kunststoff aufgebracht. Die Spulensignale gelangen zu einer Auswerteelektronik 19, die auf der gleichen Leiterplatte 3 liegen kann. Die Auswerteelektronik 19 besteht aus Transistoren, Widerständen und Kondensatoren, die beispielsweise die Baugruppen 13, 15 und 17 gemäß Figur 5 bilden. Über eine serielle Schnittstelle 21 werden die Sensorsignale an den AD-Wandler des Mikrokontrollers 5 (in Figur 5 zu sehen) weitergeleitet. Diese Sensorsignale haben die Form analoger Gleichspannungen, können aber auch analog pulsweitenmoduliert sein.

Eine der Sensorspulen Li oder einzelne Bauelemente der Auswerteelektronik 19 können unter Umständen ausfallen. Für diesen Fall schafft die Erfindung Abhilfe. Die Bedämpfungsflächen 9 und 9' des Betätigungselements 7 liegen sich einerseits gegenüber, d.h. die Betätigungsfläche 9 wird auf der Oberseite der Leiterplatte 3 verschoben und die Betätigungsfläche 9' wird auf der Unterseite der Leiterplatte verschoben (wie Figur 13 zeigt). Durch diese Anordnung in zwei Ebenen können die mechanischen Toleranzen, die zu Abstandsänderungen der Bedämpfungsflächen 9, 9' führen, ausgeglichen werden.

Andererseits zeigt Figur 12 eine Versetzung der Bedämpfungsflächen 9, 9' in Bahnrichtung. Die Position des doppelt ausgeführten Betätigungselements 7 wird rechnerisch vermittelt. Weil jedes Sensorsignal analog gemessen wird, können auch Zwischenpositionen mit hoher Auflösung erfasst werden. Dadurch, dass zwei versetzte Bedämpfungselemente 9, 9' verwendet werden, kann selbst bei Ausfall einer Sensorspule oder der dazugehörigen elektronischen Bauelemente die Position noch hinreichend genau ermittelt werden. Wenn z.B. die Bedämpfungsfläche 9 auf eine ausgefallene Sensorspule trifft, dann erfährt eine intakte Sensorspule eine maximale Dämpfung durch die verbleibende Bedänipfungsfläche 9'.

Bei der Ausführungsform nach Figur 14 kommt im Vergleich zu Figur 12 eine dritte versetzte Bedämpfungsfläche 9" auf dem Betätigungselement 7 hinzu. Es entsteht eine Anordnung mit zwei Bedämpfungsflächen 9 und 9" in einer Ebene und einer gegenüber liegenden Bedämpfungsfläche 9'. Die Algorithmen zur Bestimmung der Bahnposition x (siehe beispielsweise in Figur 10) sind trennscharf genug, um die gesuchte Bahnposition x auch aus lückenhaften Sensorsignalen herauszurechnen.

Figur 15 zeigt gegenüber Figur 14 zwei Abwandlungen, die einzeln oder gemeinsam erfolgen können.

Drei versetzte Bedämpfungsflächen 9, 10 und 9" liegen in einer Ebene auf der Oberseite des Betätigungselements 7. Diese Anordnung ist vorteilhaft, wenn die Abstandstoleranzen keine Rolle spielen oder wenn die Unterseite der Leiterplatte 3 frei bleiben soll.

Ferner sind in Figur 15 die Sensorspulen Li kreisbogenförmig aufgereiht und das Betätigungselement 7 wird um eine Drehachse 23 schwenkbar über die Sensorspulen Li geführt. Mit diesem Merkmal ist das beschriebene redundante Sensorprinzip auch für Winkelmessungen geeignet. In Figur 15 kann ein Kreissegment detektiert werden; es ist jedoch auch eine volle Umdrehung des Betätigungselements 7 möglich. Beispielhafte Anwendungen im Fahrzeugbereich sind eine Winkelmessung der Sitzlehnenposition oder des Gaspedals.

In Fig. 15 ist das Betätigungselement 7 entsprechend der Bogenanordnung der Spulen Li geschwungen und trägt rautenförmige Bedämpfungsflächen 9,10. Bei stärkeren Krümmungen erzielt man mit runden oder kreisförmigen Bedämpfungsflächen bessere Ergebnisse, d.h. besser ineinander greifende Dämpfungskurven.

Für lineare Bewegungen weist das Betätigungselement 7 leitfähige Bedämpfungsflächen 9 auf, die zweckmässigerweise rautenförmig sind. Jede rautenförmige Bedämpfungsfläche 9 hat bevorzugt eine Länge in Bahnrichtung, durch die drei Spulen Li gleichzeitig bedämpft werden (vgl. Fig. 8). Beispielsweise grenzt der Dämpfungsbereich der vierten Spule L4 an den Dämpfungsbereich der ersten Spule L1. Ausserdem wird die Breitendimension der Raute so angepasst, dass der Dämpfungsverlauf einer Spule in guter Näherung einer Parabel ähnelt. Durch die entstehende Überlagerung von drei Parabeln pro Raute wird die rechnerische Interpolation hin zu einer fiktiven Parabel, deren Scheitelpunkt bei der Wegmarke x der Raute liegt, unterstützt.

Wenn zwei Rauten 9, 10 in Bahnrichtung versetzt sind, beispielsweise um die Entfernung zweier Spulen L8 und L10, erstreckt sich die Dämpfungswirkung über fünf Spulen. Dann kann die quadratische Interpolation gemäss Fig. 10 auf fünf Messwerten basieren, so dass der Ausfall eines Spulenmesswerts nicht nur sicher erkannt, sondern auch programmtechnisch überbrückt werden kann.

Alle konstruktiven Eigenschaften und Merkmale der Erfindung können statt mit einer Reihe von Sensorspulen Li auch mit einer Reihe von Hall-Sensoren verwirklicht werden. Das Betätigungselement 7 trägt in diesem Fall Grundflächen 9 aus permanent-magnetischem Material und die Auswerteelektronik 19 ist in diesem Fall in bekannter Weise zur Verarbeitung der Hall-Sensorsignale geeignet. Unter dem permanent-magnetischen Betätigungselement ist sowohl ein beweglicher Permanentmagnet als auch ein magnetisches Abschirmelement zu verstehen, das durch das Feld eines feststehenden Permanentmagneten geführt wird.

Bei einem bekannten elektronischen Wählhebelmodul werden derzeit 20 Hall-Sensoren verwendet, wobei jede Schaltposition aus Sicherheitsgründen doppelt detektiert wird. Mit dem Prinzip des versetzten Betätigungselements kann die Anzahl der Hall-Sensoren auf 10, im ungünstigsten Fall auf 12, reduziert werden. Die Sensorpositionen sind zwar nur noch einfach besetzt, jedoch erhält ein benachbarter Sensor ein maximales Signal durch die versetzte Fläche 9'. Da die Sensoren einen erheblichen Teil der Systemkosten ausmachen, führt die erfindungsgemäße Lösung zu einer deutlichen Kosteneinsparung.

### Liste der Bezugszeichen

- L: induktiver Sensor
- L': gegenüberliegender induktiver Sensor
- L1: erster induktiver Sensor
- Li: i. induktiver Sensor
- i: Spulenindex
- a: Abstand
- x: Wegmarke des Schwerpunkts
- 1: Induktive Sensoreinheit
- 3: Leiterplatte
- 5: Mikrokontroller
- 7: leitfähiges Betätigungselement
- 9, 9', 9": rautenförmige Grundflächen, Bedämpfungsflächen
- 10: versetzte Bedämpfungsfläche
- 11: Sinusoszillator
- 13: Stromverstärker und Strom-Spannungswandler
- 15: HF-Gleichrichter
- 17: Multiplexer
- 19: Auswerteelektronik
- 21: Schnittstelle
- 23: Drehachse

## Patentansprüche

1. Induktive Sensoreinheit (1), beispielsweise für eine Positionserkennung eines Fahrzeugsitzes,
- mit einer Mehrzahl von Sensorspulen (L1 ...Li), die planar auf einer Leiterplatte (3) aufgebracht sind,
- mit einem leitfähigen Betätigungselement (7), das beabstandet (a) auf einer Bahn über die Sensorspulen (L1 1...Li) geführt wird,
- und mit einer elektrischen Auswerteschaltung (5, 11-17; 19), die Induktivitätssänderungen der Sensorspulen (L1...Li) entsprechend einer Bahnposition (x) des Betätigungselements (7) erfasst und in elektrische Signale -insbesondere in Sitzpositionssignaleumsetzt,
**dadurch gekennzeichnet, dass**
- das Betätigungselement (7) mit in Richtung der Bahn versetzten, leitfähigen Grundflächen (9, 9', 9", 10) über die Sensorspulen (L1...Li) geführt wird.

2. Induktive Sensoreinheit (1) nach Anspruch 1, **dadurch gekennzeichnet, dass** das leitfähige Betätigungselement (7) gabelförmig mit zwei beidseitig beabstandeten Grundflächen (9, 9') die Leiterplatte (3) übergreift.

3. Induktive Sensoreinheit (1) nach Anspruch 2, **dadurch gekennzeichnet, dass** das leitfähige Betätigungselement (7) mit einer weiteren Grundfläche (9") gabelförmig die Leiterplatte (3) übergreift.

4. Induktive Sensoreinheit (1) nach Anspruch 1, **dadurch gekennzeichnet, dass** das leitfähige Betätigungselement (7) mit zwei (9, 10) oder mit drei (9, 10, 9") einseitig beabstandeten Grundflächen über die Leiterplatte (3) geführt wird.

5. Induktive Sensoreinheit (1) nach einem der vorhergehenden Ansprüche, **dadurch gekennzeichnet, dass** das leitfähige Betätigungselement (7) auf einer Seite oder auf beiden Seiten der Leiterplatte (3) rautenförmige Grundflächen (9, 9', 9", 10) aufweist.

6. Induktive Sensoreinheit (1) nach einem der vorhergehenden Ansprüche, **dadurch gekennzeichnet, dass** die Leiterplatte (3) mit den planar aufgebrachten Sensorspulen (L1...Li) eben ist.

7. Induktive Sensoreinheit (1) nach einem der Ansprüche 1 bis 5, **dadurch gekennzeichnet, dass** die Leiterplatte (3) mit den planar aufgebrachten Sensorspulen (L1...Li) gekrümmt ist.

8. Induktive Sensoreinheit (1) nach einem der vorhergehenden Ansprüche, **dadurch gekennzeichnet, dass** die Mehrzahl der Sensorspulen (L1...Li) linear auf der Leiterplatte (3) aufgereiht ist und das Betätigungselement (7) zwecks Wegmessung auf einer geraden Bahn über die Sensorspulen (L1...Li) geführt wird.

9. Induktive Sensoreinheit (1) nach einem der Ansprüche 1 bis 7, **dadurch gekennzeichnet, dass** die Mehrzahl der Sensorspulen (L1...Li) kreisbogenförmig auf der Leiterplatte (3) aufgereiht ist und das Betätigungselement (7) zwecks Winkelmessung um eine Drehachse (23) schwenkbar über die Sensorspulen (L1...Li) geführt wird.

10. Induktive Sensoreinheit (1) nach einem der vorhergehenden Ansprüche 1 bis 8, **dadurch gekennzeichnet, dass** die Mehrzahl der planaren Sensorspulen (L1...Li) auf einer Seite (Sensor L) der Leiterplatte (3) angebracht ist (Bild 11a).

11. Induktive Sensoreinheit (1) nach einem der vorhergehenden Ansprüche **dadurch gekennzeichnet, dass** die Mehrzahl der planaren Sensorspulen (L1...Li) auch auf der anderen Seite (L') der Leiterplatte (3) angebracht ist (Bilder 11b und 11c).

12. Induktive Sensoreinheit (1) nach Anspruch 11, **dadurch gekennzeichnet, dass** zwei Sensorspulen (L, L'), die sich auf den , beiden Seiten der Leiterplatte (3) planar gegenüberliegen, in Serie geschaltet sind (Bilder 6 und 11b).

13. Induktive Sensoreinheit (1) nach Anspruch 11, **dadurch gekennzeichnet, dass** die Messsignale zweier Sensorspulen (L, L'), die sich auf den beiden Seiten der Leiterplatte (3) planar gegenüberliegen, in der Auswerteschaltung (5, 11-17) addiert werden (Bild 11c).

14. Induktive Sensoreinheit (1) nach einem der vorhergehenden Ansprüche, **dadurch gekennzeichnet, dass** die elektrische Auswerteschaltung (19) einen oder mehrere Schwingkreise umfasst, deren Resonanzfrequenz durch die Induktivität der Sensorspulen (L1 ... Li) mitbestimmt wird.

15. Induktive Sensoreinheit (1) nach Anspruch 1 bis 13, **dadurch gekennzeichnet, dass** die elektrische Auswerteschaltung (5, 11-17) eine Reaktanzmessung der Sensorspulen (L1...Li) bei Stromeinprägung (11, 13) umfasst.

16. Induktive Sensoreinheit (1) nach Anspruch 1 bis 13, **dadurch gekennzeichnet, dass** die elektrische Auswerteschaltung (19) eine Reaktanzmessung der Sensorspulen (L1... Li) bei Spannungseinprägung umfasst.

17. Hall-Sensoreinheit (1), beispielsweise für eine Positionserkennung eines Fahrzeugsitzes,
- mit einer Mehrzahl von Hall-Sensoren, die auf einer Leiterplatte (3) aufgebracht sind,
- mit einem permanentmagnetischen Betätigungselement (7), das beabstandet (a) auf einer Bahn über die Hall-Sensoren geführt wird,
- und mit einer elektrischen Auswerteschaltung (19), die Signaländerungen der Hall-Sensoren entsprechend einer Bahnposition (x) des Betätigungselements (7) erfasst und in elektrische Signale -insbesondere in Sitzpositionssignaleumsetzt,
**dadurch gekennzeichnet, dass** das permanentmagnetische Betätigungselement (7) beidseitig (9, 9') beabstandet und/oder mit in Richtung der Bahn versetzten Grundflächen (9, 9', 9", 10) über die Hall-Sensoren geführt wird.

18. Hall-Sensoreinheit (1) nach Anspruch 17, **dadurch gekennzeichnet, dass** die Mehrzahl von Hall-Sensoren auf beiden Seiten der Leiterplatte (3) aufgebracht ist.

19. Hall-Sensoreinheit (1) nach Anspruch 17 oder 18, **dadurch gekennzeichnet, dass** die elektrische Auswerteschaltung (19) die Signale aller Hall-Sensoren erfasst und mittels eines Algorithmus in eine aktuelle Bahnposition (x) des Betätigungselements (7) umsetzt.
